**Europäisches Patentamt**

**European Patent Office**

**Office européen des brevets**

(11) Veröffentlichungsnummer: **0 151 384**
A2

(12) # EUROPÄISCHE PATENTANMELDUNG

(21) Anmeldenummer: 85100053.9

(22) Anmeldetag: 02.01.85

(51) Int. Cl.⁴: **B 23 B 29/26**

(30) Priorität: 09.02.84 DE 3404643

(43) Veröffentlichungstag der Anmeldung:
14.08.85 Patentblatt 85/33

(84) Benannte Vertragsstaaten:
CH DE FR GB IT LI NL

(71) Anmelder: Max-Planck-Gesellschaft zur Förderung der
Wissenschaften e.V.
Bunsenstrasse 10
D-3400 Göttingen(DE)

(72) Erfinder: Kotzlowski, Heinz Ernst
Moarstrasse 18
D-8045 Ismaning(DE)

(74) Vertreter: von Bezold, Dieter, Dr. et al,
Patentanwälte Dr. D. von Bezold, Dipl.-Ing. P. Schütz,
Dipl.-Ing. W. Heusler Maria-Theresia-Strasse 22 Postfach
86 02 60
D-8000 München 86(DE)

(54) **Werkzeug zum Abdrehen eines zylindrischen Werkstücks.**

(57) Es wird ein Abschälwerkzeug für Bundbolzen oder andere zylindrische Werkstücke beschrieben, das baukastenartig aus drei Teilen, nämlich einem Haltetungsteil (10) mit Spannvorrichtung (16), einem Messerkopfteil (14) und einem rohrförmigen Verbindungsteil (12) für die ersten beiden Teile (16, 14) besteht. Es sind ein Satz von Verbindungsrohren unterschiedlicher Länge, verschiedene Spannvorrichtungen, wie Spannzapfen oder Bohrfutterkegel, und ein Satz von Messerköpfen mit unterschiedlichen Abschäldurchmessern vorgesehen, so daß das Werkzeug durch Kombination geeigneter Teile schnell an die jeweilige Aufgabe angepaßt werden kann.

Fig 2

EP 0 151 384 A2

## DR. DIETER V. BEZOLD
## DIPL. ING. PETER SCHÜTZ
## DIPL. ING. WOLFGANG HEUSLER
### PATENTANWÄLTE
MARIA-THERESIA-STRASSE 22
POSTFACH 860260
## D-8000 MUENCHEN 86

**0151384**

ZUGELASSEN BEIM
EUROPÄISCHEN PATENTAMT

EUROPEAN PATENT ATTORNEYS

MANDATAIRES EN BREVETS EUROPÉENS

2. Januar 1985
11540EP Dr.v.B/Schä/34

TELEFON (089) 470 60 06
TELEX 522638
TELEGRAMM SOMBEZ
FAX GR II + III (089) 2716063

Max-Planck-Gesellschaft

zur Förderung der Wissenschaften e.V.,

Bunsenstrasse 10, D-3400 Göttingen (DE)


## Werkzeug zum Abdrehen eines zylindrischen Werkstücks


Die vorliegende Erfindung betrifft ein Werkzeug zum Abdrehen eines zylindrischen Werkstückes. Insbesondere betrifft die Erfindung ein Werkzeug zum Abdrehen eines verdickten Schaftteiles und/oder eines Schweißwulstes eines an einer Fläche angeschweißten Bolzens.

Aus der DE-A-31 31 055 ist es bekannt, Schraubenbolzen mit einem verdickten Bund oder Schaftende an einer Fläche stumpf anzuschweißen und das verdickte Ende und/oder den beim Schweißen entstandenen Schweißwulst mittels eines Werkzeuges abzudrehen, welches an einem Ende einen Spannzapfen zum Einspannen in ein Spannfutter einer Handbohrmaschine und am anderen Ende eine zur Aufnahme des freien Endes des abzudrehenden Bolzens dienende Ausnehmung sowie Halterungen für Drehmeißel aufweist, in denen jeweils ein Drehmeißel mit in die Ausnehmung vorspringender Schneide gehaltert ist.

POSTSCHECK MÜNCHEN NR. 69148-800 · BANKKONTO HYPOBANK MÜNCHEN (BLZ 700200 40) KTO. 6060287 378 SWIFT HYPO DE MM

- 2 - **0151384**

Es ist ferner aus DE-U-81 20 797 ein Drehwerkzeug für die Endbearbeitung von Wellen, Zapfen, Rohren u. dgl. bekannt, das einen
scheibenförmigen Grundkörper mit mittigem axialen Loch aufweist,
der an seiner hinteren Grundfläche mit einem Tragkörper verschraubt
ist, welcher zur Befestigung an einer Spindel einer Drehmaschine
dient und einen genormten Konus aufweisen kann. Die vordere
Grundfläche hat vier außermittige axiale Bohrungen, in denen
jeweils ein Schaft eines Werkzeughalters verdrehsicher befestigt
ist. Die Werkzeughalter sind axial verstellbar und tragen radial
verstellbare Schneidplattenträger, in denen wiederum die Schneidplatten, also die eigentlichen Werkzeuge gehaltert sind. Dieses
bekannte Drehwerkzeug ist wegen der komplexen Bearbeitungsvorgänge,
für die es bestimmt ist, relativ kompliziert und ist bei einem
Wechsel der Bearbeitungsaufgabe schwierig umzustellen.

Der vorliegenden Erfindung liegt die Aufgabe zugrunde, dieses
bekannte Werkzeug dahingehend weiterzubilden, daß es einfach an
verschiedene Bearbeitungsaufgaben, insbesondere verschiedene Bolzenabmessungen, angepaßt werden kann.

Diese Aufgabe wird durch das im Anspruch 1 gekennzeichnete Werkzeug
gelöst.

Weiterbildungen und vorteilhafte Ausgestaltungen des erfindungsgemäßen Werkzeuges sind Gegenstand von Unteransprüchen.

Das erfindungsgemäße Werkzeug läßt sich dadurch, daß es aus nur
drei einfachen Teilen besteht, nämlich einem Halterungsteil mit
Spannvorrichtung, einem rohrförmigen Verbindungsteil und einem
Messerkopfteil, sehr einfach sowie preisgünstig herstellen und
durch das Baukastenprinzip, nämlich die Verwendung von Halterungsteilen mit unterschiedlich ausgebildeten Spannvorrichtungen, verschieden langen rohrförmigen Verbindungsteilen und von Messerkopfteilen mit abgestuften Abschäldurchmessern an die jeweilige Anwendung anpassen, also z. B. für Bolzen unterschiedlicher Länge
und/oder Durchmesser sowie für ein Befestigen z. B. in einem
Bohrfutter oder direkt auf einem Kegeldorn einer Bohrmaschine.

Im folgenden wird ein Ausführungsbeispiel der Erfindung unter Bezugnahme auf die Zeichnungen näher erläutert.

Es zeigen:

Fig. 1 eine in Achsrichtung gesehene Ansicht der messerkopfseitigen Stirnseite eines Werkzeuges gemäß einer Ausführungsform der Erfindung,

Fig. 2 eine zum Teil im Axialschnitt gezeichnete Seitenansicht des Werkzeugs gemäß Fig. 1 und

Fig. 3 einen Axialschnitt einer einen Bohrfutterkegel aufweisenden Spannvorrichtung.

Das in der Zeichnung dargestellte Abdreh- oder Abschälwerkzeug besteht im wesentlichen aus drei Teilen, nämlich einem Halterungsteil 10, einem Verbindungsrohr oder -teil 12 und einem Messerkopfteil 14.

Die drei Teile 10, 12 und 14 sind durch Verschrauben drehsteif miteinander verbunden. Das Halterungsteil 10 bildet einen Spannzapfen 16 zum Einspannen in ein Spannfutter einer Bohrmaschine, einen ringförmigen Flanschteil 18 und einen Gewindezapfen 20 mit Außengewinde. Das Verbindungsrohr 12 hat die Form eines Hohlzylinders und ist an den Enden mit jeweils einem Innengewinde 22 bzw. 24 versehen. Es weist ferner zwei Paare einander diametral gegenüberliegender radialer Löcher 26 auf.

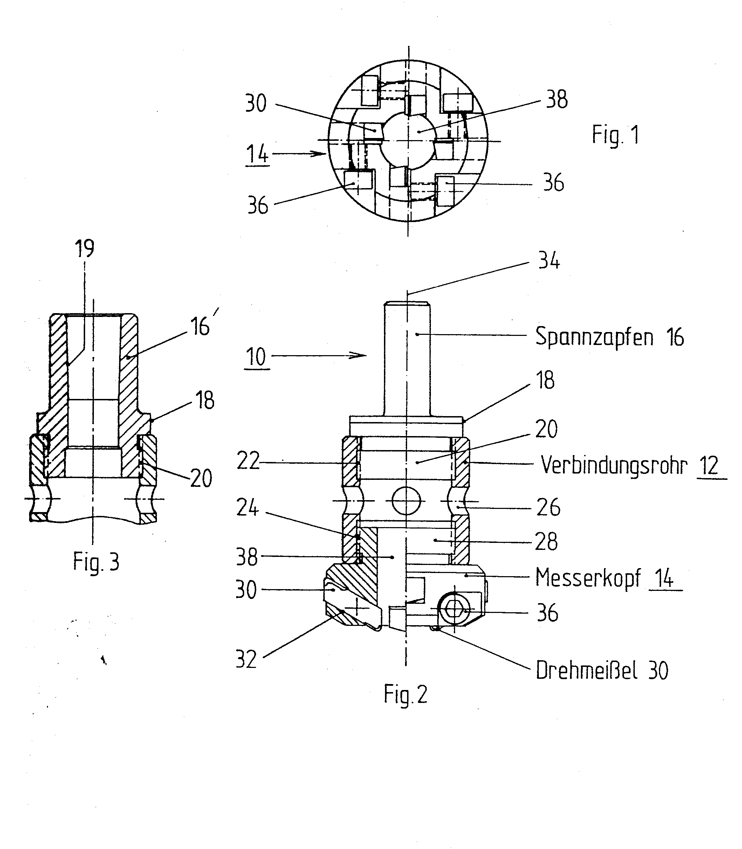

Der Messerkopf 14 hat ein buchsenförmiges oberes Ende 28 mit Außengewinde und ein unteres Ende vergrößerten Durchmessers, welches Halterungen für Drehmeißel 30 bildet. Die Halterungen bestehen aus Schlitzen 32, die radial und in der aus Fig. 2 ersichtlichen Weise schräg zur Drehachse 34 verlaufen. Die Drehmeißel 30 sind in diesen Halterungsschlitzen 32 des Messerkopftei-

les durch Klemmschrauben 36 direkt befestigt (also nicht über eigene Werkzeughalter und Schneidplattenträger, wie bei dem Werkzeug gemäß dem oben erwähnten DE-U-81 20 797). Bei dem dargestellten Ausführungsbeispiel sind Halterungen für vier Drehmeißel mit gegenseitigen Winkelabständen von 90 Grad vorgesehen. Der Messerkopf 14 bildet eine mittige axiale Ausnehmung 38 zur Aufnahme des abzudrehenden Werkstücks. Wie aus Fig. 1 ersichtlich ist, ragen die Schneiden der Drehmeißel 30 in diese Ausnehmung hinein. Die Schneiden der Drehmeißel haben jeweils ein abgerundetes Vorderende, an das sich außen ein Schneidenteil, der schräg nach hinten verläuft, und innen eine Fläche anschließen, die im wesentlichen parallel zur Rotationsachse des Werkzeuges verläuft und vorzugsweise geringfügig (wenige Zehntel Millimeter) zurückversetzt ist. Diese Flächen liegen, ohne zu Schneiden, am Werkstück an und tragen dadurch zur Selbstzentrierung des Werkzeuges bezüglich des Werkstückes bei.

Bei montiertem Werkzeug sind der Gewindezapfen 20 und das Gewindeende 28 in das Verbindungsrohr 12 eingeschraubt, wie es aus Fig. 2 ersichtlich ist. In der Praxis wird ein Satz von Verbindungsrohren unterschiedlicher Längen und ein Satz von Messerköpfen mit abgestuften Durchmessern der Ausnehmung 38 und/oder des radialen Abstandes der Schneiden der Drehmeißel 30 vorgesehen. Das Werkzeug kann dann durch Wahl eines Verbindungsrohres 12 und eines Messerkopfes 14, die der jeweiligen Aufgabe angepaßt sind, für die verschiedensten Zwecke verwendet werden. Das Zusammensetzen und Zerlegen läßt sich gegebenenfalls mit Hilfe eines durch die Öffnungen 26 gesteckten Stabes schnell bewirken, so daß nur kurze Rüstzeiten benötigt werden.

Wie Fig. 3 zeigt, kann die Spannvorrichtung 16' des ersten Teiles auch einen inneren Bohrfutterkegel 19 für einen genormten Spann-Kegeldorn einer Bohrmaschine aufweisen.

2. Januar 1985
11540 (34)

Patentansprüche

1. Werkzeug zum Abdrehen eines zylindrischen Werkstücks, wie eines an einer Fläche angeschweißten Bundbolzens, mit einem um eine Achse (34) drehbaren Körper (14), der ein mittiges axiales Loch hat und am einen axialen Ende lösbar mit einem Halterungsteil (10), das zum Verbinden mit einem Rotationsantrieb dient, verbunden ist und am anderen Ende Drehmeißel (30) trägt, **dadurch gekennzeichnet**, daß die Drehmeißel (30) in Ausnehmungen des ein Messerkopfteil bildenden Körpers (14) sitzen und in diesen in ihrer Längsrichtung verstellbar befestigt sind, so daß sie mit ihren Schneiden in das Loch (38) vorspringen und daß das Messerkopfteil über ein rohrförmiges Verbindungsteil (12) mit dem Halterungsteil (10) lösbar verbunden ist.

2. Werkzeug nach Anspruch 1, **dadurch gekennzeichnet**, daß die drei Teile (10, 12, 14) mit Gewinden versehen und miteinander verschraubt sind.

3. Werkzeug nach Anspruch 2, **dadurch gekennzeichnet**, daß das Halterungsteil (10) einen Spannzapfen (16), einen sich daran anschließenden flanschförmigen Teil (18) und einen hierauf folgenden Gewindezapfen (20) enthält.

4. Werkzeug nach Anspruch 2, **dadurch gekennzeichnet**, daß das Halterungsteil (10) einen Bohrfutterkegel (19), einen sich daran anschließenden flanschförmigen Teil (18) und einen hierauf folgenden Gewindezapfen (20) enthält.

5. Werkzeug nach Anspruch 2, 3 oder 4, **dadurch gekennzeichnet**, daß das rohrförmige Verbindungsteil (12) an beiden Enden ein Innengewinde (22, 24) zum Einschrauben des Messerkopfteiles bzw. des Halterungsteiles (10) aufweist.

6. Werkzeug nach Anspruch 2, 3, 4 oder 5, dadurch gekennzeichnet, daß das Messerkopfteil (14) ein rohrförmiges Ende (28) mit verringertem Außendurchmesser und Außengewinde aufweist.

7. Werkzeug nach einem der vorhergehenden Ansprüche, dadurch gekennzeichnet, daß das Verbindungsteil (12) mindestens ein radiales Loch (26) aufweist.

8. Werkzeug nach einem der vorhergehenden Ansprüche, dadurch gekennzeichnet, daß das Messerkopfteil (14) für jeden Drehmeißel (30) einen radial und schräg zur Drehachse (34) verlaufenden Schlitz (32) zur Aufnahme des Drehmeißels (30) sowie eine tangentiale Klemmschraube (36) zur Fixierung des Drehmeißels enthält.

9. Werkzeug nach einem der vorhergehenden Ansprüche, dadurch gekennzeichnet, daß die Schneide der Drehmeißel (30) ein abgerundetes Vorderende aufweist, an das sich außen ein schräg nach hinten verlaufender Schneidenteil und innen eine im wesentlichen parallel zur Rotationsachse verlaufende Fläche anschließen.

10. Werkzeug nach Anspruch 9, dadurch gekennzeichnet, daß die Fläche etwas nach hinten versetzt ist.

1/1

30

38

14 →

36

36

Fig. 1

19

16'

18

20

Fig. 3

34

10 →

Spannzapfen 16

18

20

Verbindungsrohr 12

22

26

24

28

38

Messerkopf 14

30

36

32

Drehmeißel 30

Fig. 2